(19) Europäisches Patentamt
European Patent Office
Office européen des brevets

(11) **EP 2 230 534 A1**

(12) **EUROPEAN PATENT APPLICATION**

(43) Date of publication:
**22.09.2010 Bulletin 2010/38**

(51) Int Cl.:
*G01V 3/02* (2006.01)       *G01V 3/12* (2006.01)

(21) Application number: **10155816.1**

(22) Date of filing: **08.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **16.03.2009 US 381690**

(71) Applicant: **MTEM Limited**
**Edinburgh EH11 4EP (GB)**

(72) Inventors:
• **Hobbs, Bruce Alan**
  **Penicuilk, EH26 8PN (GB)**
• **Werthmüller, Dieter**
  **CH-5112, Thalheim (CH)**

(74) Representative: **Lord, Michael**
**Gill Jennings & Every LLP**
**Broadgate House**
**7 Eldon Street**
**London EC2M 7LH (GB)**

(54) **Method for determining resistivity anistropy from earth electromagnetic responses**

(57)     A method for determining resistivity anisotropy of subsurface rock formations from measurements of response to a transient electromagnetic field imparted into the subsurface and measured at a plurality of distances from a position of the imparting includes that for each offset, a step response of the formations is determined at a time from the imparting selected such that the step response is related substantially only to horizontal resistivity and at a time from the imparting selected such that the step response is related substantially only to mean resistivity. The horizontal resistivity step response and the mean resistivity step response are used to determine the resistivity anisotropy.

FIG. 1

**Description**

The invention relates generally to the field of electromagnetic surveying of formations in the Earth's subsurface. More particularly, the invention relates to methods for determining electrical resistivity anisotropy in subsurface formations using electromagnetic measurements.

Electromagnetic surveying is used for, among other purposes, determining the presence of hydrocarbon bearing structures in the Earth's subsurface. Presence of hydrocarbon bearing structures is typically inferred by determining the presence of high resistivity in the subsurface, because high resistivity is associated with subsurface formations having hydrocarbons disposed in the pore spaces therein.

Electromagnetic surveying includes what are called "controlled source" survey techniques. Controlled source electromagnetic surveying techniques include imparting an electric current or a magnetic field into the Earth, when such surveys are conducted on land, or imparting the same into sediments below the water bottom (sea floor) when such surveys are conducted in a marine environment. The techniques include measuring voltages and/or magnetic fields induced in electrodes, antennas and/or magnetometers disposed at the Earth's surface, on the sea floor or at a selected depth in the water. The voltages and/or magnetic fields are induced by interaction of the electromagnetic field caused by the electric current and/or magnetic field imparted into the Earth's subsurface (through the water bottom in marine surveys) with the subsurface Earth formations.

Marine controlled source electromagnetic surveying known in the art includes imparting alternating electric current into the sediments below the water bottom by applying current from a source, usually disposed on a survey vessel, to a bipole electrode towed by the survey vessel. A bipole electrode is typically an insulated electrical cable having two electrodes thereon at a selected spacing, sometimes 300 to 1000 meters or more. The alternating current has one or more selected frequencies, typically within a range of about 0.1 to 100 Hz. A plurality of detector electrodes is disposed on the water bottom at spaced apart locations, and the detector electrodes are connected to devices that record the voltages induced across various pairs of such electrodes. Such surveying is known as frequency domain controlled source electromagnetic surveying.

Another controlled source technique for electromagnetic surveying of subsurface Earth formations known in the art is transient controlled source electromagnetic surveying. In transient controlled source electromagnetic surveying, an electric current or a magnetic field is imparted into the Earth, when such surveys are conducted on land, or is imparted into sediments below the water bottom (sea floor) when such surveys are conducted in a marine environment using electrodes on a cable similar to those explained above as used for frequency domain surveying. The electric current may be direct current (DC). At a selected time or times, the electric current is switched, and induced voltages are measured, typically with respect to time over a selected time interval, using electrodes disposed on land or in the water column or on the water bottom as previously explained with reference to frequency domain surveying. Structure and composition of the Earth's subsurface are inferred by the time and space distribution of the induced voltages. t-CSEM surveying techniques are described, for example, in International Patent Application Publication No. WO 2007/104949 A1 entitled, *Optimization of MTEMP Parameters*.

One of the specific parameters determined from the time distribution of induced voltages is the electrical resistivity of the subsurface formations. By making suitable spatially distributed electromagnetic response measurements, it is possible to generate a three dimensional image of the spatial distribution of electrical resistivity in the Earth's subsurface.

Techniques known in the art for determining spatial distribution of electrical resistivity using electromagnetic survey measurements typically assume that the electrical resistivity is isotropic, that is, the resistivity is the same in any particular subsurface rock formation irrespective of the direction of electric current flow used to make the measurements. It is known in the art, however that electrical resistivity of some rock formations is anisotropic. Resistivity anisotropy is present in some rock formations in a variety of scales from micro (e.g., grain size pore water connectivity variation) to macro (e.g., laminated sand-shale sequences). See, for example, U.S. Patent No. 6,643,589 issued to Zhang et al. and U.S. Patent No. 7,269,515 issued to Tabarovsky et al. The foregoing two patents describe techniques for determining electrical resistivity and resistivity anisotropy from within wellbores drilled through the subsurface rock formations. However, such techniques are not applicable to use with electromagnetic surveying conducted from above the rock formations of interest. There exists a need for electromagnetic survey techniques that account for resistivity anisotropy.

**Summary of the Invention**

A method for determining resistivity anisotropy of subsurface rock formations according to one aspect of the invention includes imparting a transient electromagnetic field into the subsurface rock formations. Electromagnetic response of the formations is measured at a plurality of distances from a position of the imparting. For each offset, a step response of the formations is determined. One time from the imparting may be selected such that the value of the step response at that time is related substantially only to horizontal resistivity and another time from the imparting may be selected such that the value of the step response at that second time is related substantially only to mean resistivity. The horizontal resistivity so found and the mean resistivity so found are used to determine the resistivity anisotropy.

A method for determining resistivity distribution in subsurface formations according to another aspect of the invention includes using measurements made in response to imparting a transient electromagnetic field into the subsurface formations. The measurements are made at a plurality of offsets from a position at which the electromagnetic field was imparted. A method according to this aspect of the invention includes determining a step response of the formations. One time from the imparting may be selected such that the value of the step response at that time is related substantially only to horizontal resistivity and another time from the imparting may be selected such that the value of the step response at that second time is related substantially only to mean resistivity. The horizontal resistivity so found and the mean resistivity so found are used to determine the resistivity anisotropy.

In one example implementation, an initial model of the subsurface formations is generated using the determined horizontal resistivity and resistivity anisotropy values. Step responses as a function of offset are calculated for this initial model and a value of anisotropy ratio is calculated with respect to offset using the values of horizontal resistivity obtained at one selected time from imparting and the mean resistivity obtained at another time from imparting. The calculated anisotropy ratios at each offset are compared with those determined from the measured step responses. The initial model is adjusted and the calculating anisotropy ratio, measured anisotropy ratio and comparing are repeated until differences between the calculated anisotropy ratios and the measured anisotropy ratios reach a minimum or fall below a selected threshold.

Other aspects and advantages of the invention will be apparent from the following description and the appended claims.

### Brief Description of the Drawings

FIG. 1 shows an example system for acquiring electromagnetic measurements used with the invention.

FIG. 2 shows a three layer model of resistivities of subsurface rock formations having selected anisotropy ratios.

FIG. 3 shows graphs of apparent anisotropy ratios with respect to offset for the model formations shown in FIG. 2.

FIG. 4 shows an example early time and late time "step response" of subsurface formations to a transient electromagnetic field.

### Detailed Description

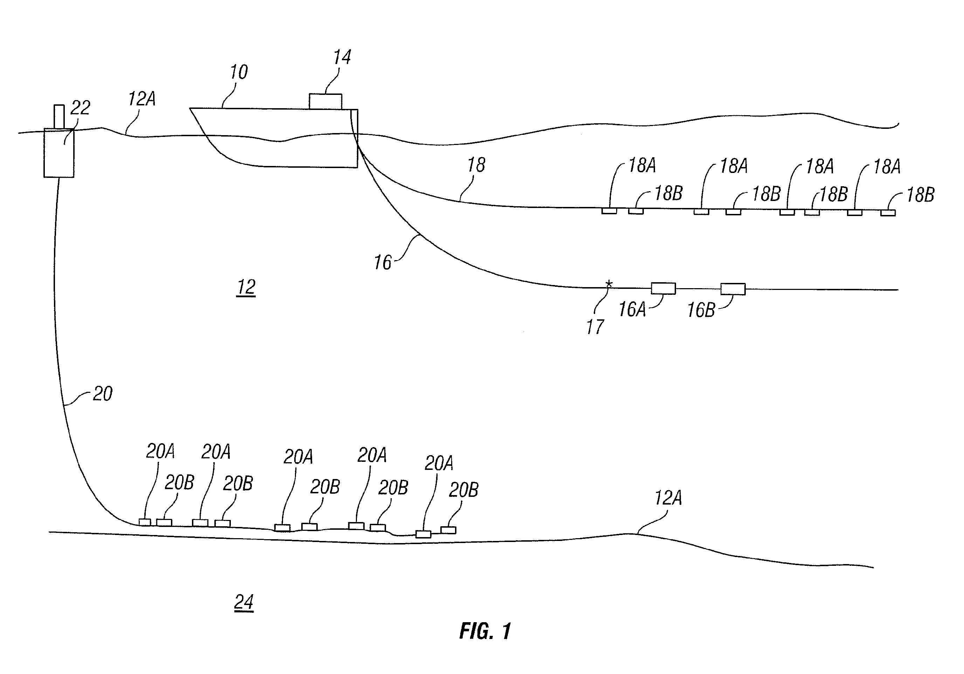

FIG. 1 shows an example marine electromagnetic survey system that may acquire transient controlled source electromagnetic survey signals for processing according to the invention. The system may include a survey vessel 10 that moves along the surface 12A of a body of water 12 such as a lake or the ocean. The vessel 10 may include thereon equipment, referred to for convenience as a "recording system" and shown generally at 14, for generating electromagnetic fields to be imparted into formations 24 below the bottom of the water 12 and for recording measurements made in response to the imparted electromagnetic fields. The recording system 14 may include (none shown separately for clarity of the illustration) navigation devices to determine the geodetic position of the vessel 10. The vessel may include further equipment for determining geodetic position and/or heading of one or more electromagnetic transmitters and receivers (described below), devices for imparting electric current to the transmitter(s); and data storage equipment for recording signals detected by the one or more electromagnetic receivers.

The electromagnetic transmitter in the present example may be a bipole electrode, shown as a pair of electrodes at 16A, 16B disposed along an electrical cable 16 towed by the vessel 10. At selected times, the recording system 14 may pass electric current through the electrodes 16A, 16B. The current is preferably configured to induce transient electromagnetic fields in the formations 24 below the water bottom 12A. Examples of such current include switched direct current, wherein the current may be switched on, switched off, reversed polarity, or switched in an extended set of switching events, such as a pseudo random binary sequence ("PRBS") or other coded sequence.

In the present example, the vessel 10 may tow one or more receiver cables 18 having thereon a plurality of electromagnetic receivers, such as bipole electrodes 18A, 18B, disposed at spaced apart positions along the cable. The bipole electrodes 18A, 18B will have voltages imparted across them related to the amplitude of the electric field component of the electromagnetic field emanating from the formations 24 in response to the imparted electromagnetic field. The recording system 14 on the vessel 10 may include, as explained above, devices for recording the signals generated by the electrodes 18A, 18B. The recording of each receiver's response is typically indexed with respect to a reference time, such as a current switching event in the transmitter current. A sensor 17 such as a magnetic field sensor (e.g., a magnetometer) or current meter may be disposed proximate the transmitter as shown and may be used to measure a parameter related to the amount of current flowing through the transmitter.

In the present example, in substitution of or in addition to the receiver cable 18 towed by the vessel 10, a water bottom receiver cable 20 may be disposed along the bottom of the water 12, and may include a plurality of receivers such as bipole electrodes 20A, 20B similar in configuration to the bipole electrodes 18A, 18B on the towed cable. The electrodes 20A, 20B may be in signal communication with a recording buoy 22 or similar device either near the water surface 12A or on the water bottom that may record signals detected by the electrodes 20A, 20B.

It will be appreciated by those skilled in the art that the invention is not limited in scope to the transmitter and receiver arrangements shown in FIG. 1. Other examples may use, in substitution of or in addition to the bipole electrodes shown in FIG. 1, wire coils or wire loops for the transmitter to impart a time varying magnetic field into the formations 24. The receiver cables 18, 20 may include other sensing devices, such as magnetometers, wire loops or coils to detect the magnetic field component of the induced electromagnetic field from the formation 24.

For purposes of explaining the invention, the receivers may be generally disposed along a common line with the transmitter during signal recording. Recordings of signals from each of the respective receivers may be made with the transmitter disposed at selected locations along the common line and actuated as explained above. The recorded signal corresponding to each electromagnetic receiver will be associated with a distance, called "offset", that is located at the geodetic midpoint between the receiver geodetic position and the geodetic position of the transmitter at the time of signal recording. Thus, signals corresponding to a plurality of offsets may be acquired. The purpose for multiple offset recording as it relates to the invention will be further explained below.

As explained in the Background section herein, some formations may be electrically anisotropic, and as a result have anisotropic resistivity. For purposes of the present invention, resistivity anisotropy will be limited to the case of vertically transversely isotropic ("VTI") formations, that is, formations which have a different "vertical" resistivity (resistivity measured using current flow in a direction perpendicular to the bedding planes of the formation) than the "horizontal" resistivity (resistivity measured using current flow in a direction parallel to the bedding planes of the formation). VTI formations are considered to have the same horizontal resistivity irrespective of the azimuthal direction along which the measurement is made. Such formations are also known as having a vertical axis of symmetry.

In VTI formations, the vertical resistivity $\rho_v$ and the horizontal resistivity $\rho_h$ define an "anisotropy factor" which may be represented by the following expression:

$$\lambda = \sqrt{\frac{\rho_v}{\rho_h}} \qquad\qquad (1)$$

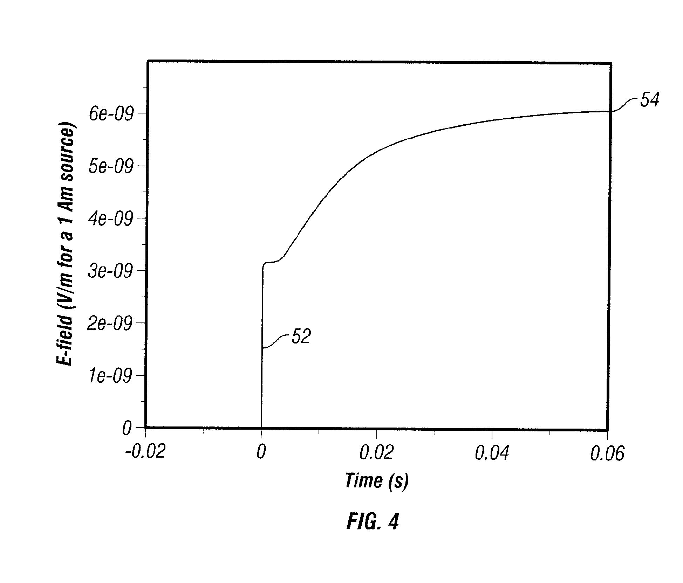

$\lambda$ typically has a value between 1 and 5. The geometric mean resistivity is $\rho_m = \sqrt{\rho_v \rho_h}$ . It has been determined through electromagnetic survey theory and modeling electromagnetic transient response of an electrically conductive half-space that the airwave (initial step response close to zero time from a transient current switching event), represented by $E(0)$, depends essentially only on the horizontal resistivity $\rho_h$. A late time (with respect to the transmitter switching event time) step response, which is the DC approximate response, represented by $E(\infty)$, depends essentially only on the geometric mean resistivity of all formations through which the electromagnetic field propagates. The "step response" is the voltage or magnetic field amplitude measured in response to a step function change in the transmitter current, that is, the measured response to switching the current and holding the current at the switched-to value. The step response is the integral of the impulse response. The impulse response is the measured field amplitude or imparted voltage with respect to time, indexed to the time of the switching event. An example of early time and late time step response is shown in the graph of FIG. 4 at 52 and 54, respectively.

Using results described in, Wilson, A.J.S., 1997, The equivalent wavefield concept in multichannel transient electromagnetic surveying: Ph.D. Thesis, University of Edinburgh, for a uniform isotropic halfspace having resistivity $\rho$ and measurements obtained as explained above, the following expressions may be derived:

$$E(0) = \frac{\rho}{2\pi r^3} = \frac{\rho_h}{2\pi r^3} \qquad\qquad (2)$$

$$E(\infty) = \frac{\rho}{\pi\,r^3} = \frac{\rho_m}{\pi\,r^3} \qquad (3)$$

In the above expressions, $r$ represents the offset. The above expressions may be used to provide an expression for determining the resistivity anisotropy ratio of a uniform anisotropic halfspace:

$$\lambda = \frac{\rho_m}{\rho_h} = \frac{1}{2}\frac{E(\infty)}{E(0)} \qquad (4)$$

Combining equations (2), (3) and (4) provides an offset-related expression for determining the anisotropy ratio of a uniform anisotropic halfspace:

$$\lambda = \left(\frac{r_1}{r_2}\right)^3 \frac{E_x(r_1,\infty)}{2E_x(r_2,0)} \quad , \qquad (5)$$

in which $Ex(r,t)$ is the Earth's in-line (along the common line explained above, and indicated by the $x$ subscript) step response for offset $r$ at time $t$, $r_1$ is a selected short offset such that the late time response is easiest to determine, and $r_2$ is a selected long offset where the early time response is easiest to determine. The above expression may be extended to define the apparent anisotropy for any value of offset $r$ for any subsurface VTI formations as follows:

$$\lambda_{app}(r) = \frac{E_x(r,\infty)}{2E_x(r,0)} \qquad (6)$$

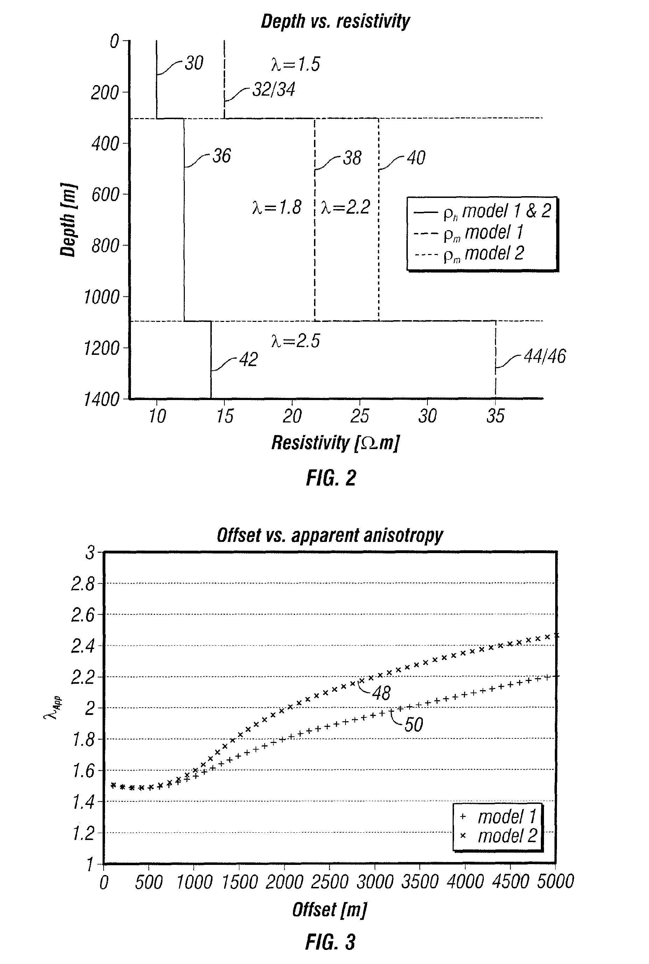

As offset increases the measured electromagnetic responses are influenced by deeper sections of the subsurface. As a result, $\lambda_{app}(r)$ varies in response to the variation of anisotropy with depth. FIG. 2, shows two, 3-layer models of subsurface formations for illustration. The depth of the formations is set to zero at the water bottom (12A in FIG. 1). An upper formation layer is shown at 30, and in both models has a horizontal resistivity equal to 10 ohm-meters, and an anisotropy ratio of 1.5. Thus in both models, the vertical resistivity of the first formation layers is 15 ohm-meters, as shown at 32 and 34. The second layer has a horizontal resistivity of 12.5 ohm-meters. In the first model, the second layer has an isotropy ratio of 1.8, shown by vertical resistivity at 38, and in the second model has an anisotropy ratio of 2.2, as shown by indicated vertical resistivity at 40. The lowermost layer in the two models has horizontal resistivity shown at 42, and anisotropy ratios of 2.5 in both models, as shown by indicated vertical resistivity values at 44 and 46.

FIG. 3 shows graphs of apparent anisotropy for each of the two above models as a function of offset, determined by modeling step response and using equation (6). The first model's apparent anisotropy function with respect to offset is shown by curve 50, and the second model apparent anisotropy function is shown by curve 48. It is apparent that $\lambda_{app}(r)$ is related to the resistivity anisotropy of the formations in the subsurface. As resistivity anisotropy increases, the apparent anisotropy increases faster with increasing offset, as shown by comparison of curves 48 and 50 in FIG. 3.

In a practical implementation of a method according to the invention, electromagnetic step responses may be obtained at a plurality of offsets, for example, performed using the system shown in FIG. 1. Step response may be obtained by inducing a transient electromagnetic field by energizing the transmitter, e.g., by conducting electric current across transmitter electrodes (16A, 16B in FIG. 1). The current may be as described with reference to FIG. 1. For example, the current may be in the form of a PRBS. Voltages induced across the various electromagnetic sensors, such as 18A, 18B in FIG. 1 or 20A, 20B in FIG. 1 may be recorded. If the transmitter current is in the form of a PBRS, the transmitter current waveform may measured and used to deconvolve the recorded voltage signals to obtain impulse response. The impulse response may be integrated to obtain the step response.

For each step response, and for each offset $r$, the amplitude of the step response at early time $[E_x(r,0)]$ and at

late time [$E_x(r,\infty)$] is then determined, as explained above with reference to FIG. 3. The apparent anisotropy $\lambda_{app}(r)$ may then be computed for each offset using equation(6). The apparent anisotropy may be used to generate an initial model of the subsurface. Typically the initial model will be a half space having a plurality of rock formation layers, in which each layer has the same value of horizontal resistivity determined from the early time step response and each layer has the same value of geometric mean resistivity determined from the late time response. The initial model may be iteratively updated by changing the horizontal resistivity and anisotropy ratio for each layer, the changes being derived for example using an Occam inversion scheme extended to include both the horizontal resistivity and the anisotropy ratio as free parameters of the inversion. See, for example, Constable, S. C., R. L. Parker, and C. G. Constable, 1987, Occam's Inversion: a practical algorithm for generating smooth models from EM sounding data, Geophysics, 52, 289-300.

For each model iteration, an apparent anisotropy ratio with respect to offset may be calculated using equation (6). The apparent anisotropy ratio may be compared to the anisotropy ratio with respect to offset determined from the measured step response of the subsurface formations to the imparted electromagnetic field. The foregoing can be repeated successively until a final image of the subsurface formations is generated. The final image may be determined to have been generated when differences between the step responses with respect to offset determined from the electromagnetic measurements, and those calculated using equation (6) from the adjusted model reach a minimum or fall below a selected threshold.

Methods according to the invention may provide images of electrical resistivity of subsurface rock formations that includes the effects of resistivity anisotropy using transient electromagnetic survey measurements.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1.  A method for determining resistivity anisotropy of subsurface rock formations, comprising:

    imparting a transient electromagnetic field into the subsurface rock formations;
    measuring electromagnetic response of the formations at a plurality of distances from a position of the imparting;
    for each offset, determining a step response of the formations at a time from the imparting selected such that the step response is related substantially only to horizontal resistivity;
    for each offset, determining a step response of the formations at a time from the imparting selected such that the step response is related substantially only to mean resistivity; and
    using the horizontal resistivity step response and the mean resistivity step response to determine the resistivity anisotropy.

2.  The method of claim 1 wherein the imparting comprises passing electric current through a transmitter, the current comprising at least one of switching current on, switching current off, reversing current polarity and switching current in a coded sequence.

3.  The method of claim 1 wherein the determining step response comprises determining impulse response and integrating the impulse response.

4.  The method of claim 3 wherein the determining impulse response comprises deconvolving the measured electromagnetic response with a waveform of an electric current used to impart the electromagnetic field.

5.  The method of claim 1 wherein the measuring the electromagnetic response comprises measuring voltages imparted across pairs of electrodes.

6.  The method of claim 1 wherein the step response corresponding substantially to the horizontal resistivity comprises electromagnetic response to an air wave.

7.  The method of claim 1 further comprising:

    (a) generating an initial model of the subsurface formations using the determined resistivity anisotropy, the initial model including a value of horizontal resistivity and a value of anisotropy ratio;
    (b) calculating a value of anisotropy ratio with respect to offset using the values of horizontal resistivity and anisotropy ratio;

(c) using the calculated anisotropy ratio with respect to offset to estimate step response of the formations at a time from the imparting selected such that the step response is related substantially only to horizontal resistivity and at a time from the imparting selected such that the step response is related substantially only to mean resistivity;

(d) comparing the estimated step responses with the determined step responses; and

(e) adjusting the initial model and repeating (b), (c), and (d) until differences between the estimated step responses and the determined step responses reach a minimum or fall below a selected threshold.

8. A method for determining resistivity distribution in subsurface formations using measurements made in response to imparting a transient electromagnetic field into the subsurface formations, the measurements made at a plurality of offsets from a position at which the electromagnetic field was imparted, the method comprising:

(a) determining a step response of the formations at a time from the imparting selected such that the step response is related substantially only to horizontal resistivity and a step response of the formations at a time from the imparting selected such that the step response is related substantially only to mean resistivity; and

(b) using the horizontal resistivity step response and the mean resistivity step response to determine the resistivity anisotropy;

9. The method of claim 8, further comprising:

(c) generating an initial model of the subsurface formations using the determined resistivity anisotropy, the initial model including a value of horizontal resistivity and a value of anisotropy ratio;

(d) calculating a value of anisotropy ratio with respect to offset using the values of horizontal resistivity and anisotropy ratio;

(e) using the calculated anisotropy ratio with respect to offset to estimate step response of the formations at a time from the imparting selected such that the step response is related substantially only to horizontal resistivity and at a time from the imparting selected such that the step response is related substantially only to mean resistivity;

(f) comparing the estimated step responses with the determined step responses; and

(g) adjusting the initial model and repeating (d), (e), and (f) until differences between the estimated step responses and the determined step responses reach a minimum or fall below a selected threshold.

10. The method of claim 8 wherein the electromagnetic field is imparted by passing electric current through a transmitter, the current comprising at least one of switching current on, switching current off, reversing current polarity and switching current in a coded sequence.

11. The method of claim 8 wherein the determining step response comprises determining impulse response and integrating the impulse response.

12. The method of claim 11 wherein the determining impulse response comprises deconvolving the measured electromagnetic response with a waveform of an electric current used to impart the electromagnetic field.

13. The method of claim 8 wherein the measured electromagnetic response comprises measurements of voltages imparted across pairs of electrodes.

14. The method of claim 8 wherein the step response corresponding substantially to the horizontal resistivity comprises electromagnetic response to an air wave.

FIG. 1

**Depth vs. resistivity**

FIG. 2

**Offset vs. apparent anisotropy**

FIG. 3

FIG. 4

Europäisches
Patentamt

European
Patent Office

Office européen
des brevets

**EUROPEAN SEARCH REPORT**

Application Number

EP 10 15 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | D. WRIGHT AND A. ZIOLKOWSKI: "Travel time to resistivity mapping using the Multi Transient Electromagnetic (MTEM) method" EAGE 69TH, CONFERENCE AND EXHIBITION, 11 June 2007 (2007-06-11), - 14 June 2007 (2007-06-14) XP002589292 * the whole document * | 1-14 | INV. G01V3/02 G01V3/12 |
| Y | US 2005/218914 A1 (BRABERS PETERALV [BE]) 6 October 2005 (2005-10-06) * paragraph [0003] - paragraph [0004] * * figure 1 * | 1-14 | |
| A | A. ZIOLKOWSKI ET AL.: "Multitransient electromagnetic demonstration survey in France" EAGE 69TH CONFERENCE AND EXHIBITION, vol. 72, no. 4, August 2007 (2007-08), pages F197-F209, XP002589293 London * the whole document * | 1-14 | |
| A | US 2006/186887 A1 (STRACK KURT M [US] ET AL) 24 August 2006 (2006-08-24) * paragraph [0010] * * paragraph [0021] - paragraph [0023] * * paragraph [0039] - paragraph [0061] * | 1-14 | TECHNICAL FIELDS SEARCHED (IPC) G01V |
| A | N. CHRISTENSEN: "Difficulties in determining electrical anisotropy in subsurface investigations" GEOPHYSICAL PROSPECTING, vol. 48, 2000, pages 1-19, XP002589294 * page 1 - page 4 * * page 7 * | 1-14 | |

The present search report has been drawn up for all claims

| Place of search | Date of completion of the search | Examiner |
|---|---|---|
| Munich | 29 June 2010 | Marquart, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 15 5816

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2010

| Patent document cited in search report | | Publication date | Patent family member(s) | | Publication date |
|---|---|---|---|---|---|
| US 2005218914 | A1 | 06-10-2005 | NONE | | |
| US 2006186887 | A1 | 24-08-2006 | CA | 2594762 A1 | 31-08-2006 |
| | | | CN | 101501529 A | 05-08-2009 |
| | | | EA | 200701490 A1 | 29-08-2008 |
| | | | EP | 1856560 A2 | 21-11-2007 |
| | | | WO | 2006091461 A2 | 31-08-2006 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007104949 A1
- US 6643589 B, Zhang
- US 7269515 B, Tabarovsky

**Non-patent literature cited in the description**

- **Wilson, A.J.S.** The equivalent wavefield concept in multichannel transient electromagnetic surveying. *Ph.D. Thesis,* 1997
- **Constable, S. C. ; R. L. Parker ; C. G. Constable.** Occam's Inversion: a practical algorithm for generating smooth models from EM sounding data. *Geophysics,* 1987, vol. 52, 289-300